# EUROPEAN PATENT APPLICATION

(11) **EP 4 827 210 A1**
(43) Date of publication of application: **21.10.2026**
(21) Application number: 23961225.2
(22) Date of filing: 15.12.2023
(51) Int. Cl.: H04W 72/23

(54) **INFORMATION PROCESSING METHOD, TERMINAL, NETWORK DEVICE, COMMUNICATION SYSTEM, AND STORAGE MEDIUM**

(71) Applicant: Beijing Xiaomi Mobile Software Co., Ltd., Beijing 100085 (CN)
(72) Inventor: LIU, Zhengxuan, Beijing 100085 (CN)
(74) Representative: Dehns Germany Partnerschaft mbB
(86) International application number: PCT/CN2023/139293
(87) International publication number: WO 2025/123369

(57) **Abstract**

An information processing method, a terminal, a network device, a communication system, and a storage medium. The method comprises: a terminal receiving first information sent by a network device, wherein the first information is used for configuring N channel state information-reference signal (CSI-RS) resources, the N CSI-RS resources being used for the terminal to receive CSI-RSs; and the terminal determining codebook subset restriction (CBSR) information corresponding to M first CSI-RS resources, wherein the first CSI-RS resources are CSI-RS resources configured with the CBSR information among the N CSI-RS resources, M being less than or equal to N, and N being an integer greater than or equal to 1. A terminal can determine CBSR information corresponding to each first CSI-RS resource, so that the CBSR of the CSI-RS resource can be reliably configured, and a spatial domain basis vector is constrained on the basis of the CBSR, thereby improving the reliability of communication.

## Description

### TECHNICAL FIELD

The present disclosure relates to the field of communication technologies, and more particularly to a method for processing information, a terminal, a network device, a communication system, and a storage medium.

### BACKGROUND

In a scenario where a coherent joint transmission (CJT) occurs across a plurality of transmission and receiving points (TRPs), a network may configure a plurality of channel state information-reference signal (CSI-RS) resources for a terminal to measure downlink channel information from different joint TRPs to the terminal.

### SUMMARY

The present disclosure provides a method for processing information, a terminal, a network device, a communication system, and a storage medium.

According to a first aspect of embodiments of the present disclosure, a method for processing information is provided, and includes: receiving, by a terminal, first information sent by a network device, where the first information is used to configure N channel state information-reference signal (CSI-RS) resources, and the N CSI-RS resources are configured for the terminal to receive CSI-RSs; and determining, by the terminal, codebook subset restriction (CBSR) information corresponding to M first CSI-RS resources, where the M first CSI-RS resources are CSI-RS resources configured with CBSR information among the N CSI-RS resources, in which M is less than or equal to N, and N is an integer greater than or equal to 1.

According to a second aspect of embodiments of the present disclosure, a method for processing information is provided, and includes: sending, by a network device, first information to a terminal, where the first information is used to configure N CSI-RS resources, the N CSI-RS resources are configured for the terminal to receive CSI-RSs, the N CSI-RS resources include M first CSI-RS resources, and the M first CSI-RS resources are CSI-RS resources configured with CBSR information among the N CSI-RS resources, in which M is less than or equal to N, and N is an integer greater than or equal to 1.

According to a third aspect of embodiments of the present disclosure, a terminal is provided, and includes: a transceiver module configured to receive first information sent by a network device, where the first information is used to configure N CSI-RS resources, and the N CSI-RS resources are configured for the terminal to receive CSI-RSs; and a processing module configured to determine CBSR information corresponding to M first CSI-RS resources, where the M first CSI-RS resources are CSI-RS resources configured with CBSR information among the N CSI-RS resources, in which M is less than or equal to N, and N is an integer greater than or equal to 1.

According to a fourth aspect of embodiments of the present disclosure, a network device is provided, and includes: a transceiver module configured to send first information, where the first information is used to configure N CSI-RS resources, the N CSI-RS resources are configured for a terminal to receive CSI-RSs, the N CSI-RS resources include M first CSI-RS resources, and the M first CSI-RS resources are CSI-RS resources configured with CBSR information among the N CSI-RS resources, in which M is less than or equal to N, and N is an integer greater than or equal to 1.

According to a fifth aspect of embodiments of the present disclosure, a terminal is provided, and includes: one or more processors; and a memory coupled to one or more processors, and including executable instructions which, when executed by the one or more processors, cause the terminal to perform the method for processing information according to the first aspect.

According to a sixth aspect of embodiments of the present disclosure, a network device is provided, and includes: one or more processors; and a memory coupled to the one or more processors, and including executable instructions which, when executed by the one or more processors, cause the network device to perform the method for processing information according to the second aspect.

According to a seventh aspect of embodiments of the present disclosure, a communication system is provided, and includes a terminal and a network device, where the terminal is configured to perform the method for processing information according to the first aspect, and the network device is configured to perform the method for processing information according to the second aspect.

According to an eighth aspect of embodiments of the present disclosure, a storage medium is provided, and stores instructions which, when run on a communication device, cause the communication device to perform the method for processing information according to the first aspect or the second aspect.

In the above embodiments, the terminal may determine the CBSR information corresponding to each of the M first CSI-RS resources, so as to reliably configure CBSR of the CSI-RS resources and restrict a spatial domain basis vector based on the CBSR, thus improving the reliability of communication.

### BRIEF DESCRIPTION OF THE DRAWINGS

To more clearly illustrate the technical solutions in the embodiments of the present disclosure, accompanying drawings used for the description of the embodiments are introduced below. The following drawings are only some embodiments of the present disclosure and do not impose specific limitations on the protection scope of the present disclosure.
FIG. 1 is an illustrative schematic diagram of an architecture of a communication system provided according to an embodiment of the present disclosure.
FIG. 2 is an illustrative schematic interaction diagram of a method for processing information provided according to an embodiment of the present disclosure.
FIG. 3A is an illustrative schematic flowchart of a method for processing information provided according to an embodiment of the present disclosure.
FIG. 3B is an illustrative schematic flowchart of a method for processing information provided according to an embodiment of the present disclosure.
FIG. 3C is an illustrative schematic flowchart of a method for processing information provided according to an embodiment of the present disclosure.
FIG. 4A is an illustrative schematic flowchart of a method for processing information provided according to an embodiment of the present disclosure.
FIG. 4B is an illustrative schematic flowchart of a method for processing information provided according to an embodiment of the present disclosure.
FIG. 4C is an illustrative schematic flowchart of a method for processing information provided according to an embodiment of the present disclosure.
FIG. 5 is an illustrative schematic interaction diagram of a method for processing information provided according to an embodiment of the present disclosure.
FIG. 6A is an illustrative schematic flowchart of a method for processing information provided according to an embodiment of the present disclosure.
FIG. 6B is an illustrative schematic diagram of a method for processing information provided according to an embodiment of the present disclosure.
FIG. 6C is an illustrative schematic flowchart of a method for processing information provided according to an embodiment of the present disclosure.
FIG. 6D is an illustrative schematic flowchart of a method for processing information provided according to an embodiment of the present disclosure.
FIG. 6E is an illustrative schematic flowchart of a method for processing information provided according to an embodiment of the present disclosure.
FIG. 7A is an illustrative block diagram of a terminal provided according to an embodiment of the present disclosure.
FIG. 7B is an illustrative block diagram of a network device provided according to an embodiment of the present disclosure.
FIG. 8A is an illustrative block diagram of a communication device provided according to an embodiment of the present disclosure.
FIG. 8B is an illustrative block diagram of a communication device provided according to an embodiment of the present disclosure.

### DETAILED DESCRIPTION

The present disclosure provides a method for processing information, a terminal, a network device, a communication system, and a storage medium.

In a first aspect, embodiments of the present disclosure provide a method for processing information, which includes: receiving, by a terminal, first information sent by a network device, in which the first information is used to configure N channel state information-reference signal (CSI-RS) resources, and the N CSI-RS resources are configured for the terminal to receive CSI-RSs; and determining, by the terminal, codebook subset restriction (CBSR) information corresponding to M first CSI-RS resources, in which the M first CSI-RS resources are CSI-RS resources configured with CBSR information among the N CSI-RS resources, in which M is less than or equal to N, and N is an integer greater than or equal to 1.

In the above embodiments, the terminal may determine the CBSR information corresponding to each of the M first CSI-RS resources, so as to reliably configure CBSR of the CSI-RS resources and restrict a spatial domain basis vector based on the CBSR, thus improving the reliability of communication.

In some embodiments in combination with the first aspect, in some embodiments, determining, by the terminal, the CBSR information corresponding to the M first CSI-RS resources includes: receiving, by the terminal, second information sent by the network device, in which the second information includes M instances of CBSR information; and determining, by the terminal, the CBSR information corresponding to the M first CSI-RS resources according to the second information.

In the above embodiments, the M instances of CBSR information may be carried by the second information, thereby enabling the terminal to determine the CBSR information configured for each of the M first CSI-RS resources based on the second information.

In some embodiments in combination with the first aspect, in some embodiments, the M first CSI-RS resources correspond sequentially to the M instances of CBSR information according to sizes of resource identifiers of the M first CSI-RS resources.

In the above embodiments, the M first CSI-RS resources may correspond sequentially to the M instances of CBSR information based on the sizes of the resource identifiers of the M first CSI-RS resources, respectively. The terminal may determine the CBSR information corresponding to each of the M first CSI-RS resources more accurately and quickly based on the sizes of the resource identifiers of the M first CSI-RS resources, effectively improving the efficiency and accuracy of CBSR configuration.

In some embodiments in combination with the first aspect, in some embodiments, the second information further includes third information, or the method includes: receiving, by the terminal, third information sent by the network device. The third information indicates the first CSI-RS resources.

In the above embodiments, the terminal may accurately and reliably know, based on the third information, which resources in the CSI-RS resources indicated are the first CSI-RS resources configured with the CBSR and which are other CSI-RS resources not configured with the CBSR, thereby achieving more accurate CBSR configuration, and effectively improving the reliability of CBSR configuration.

In some embodiments in combination with the first aspect, in some embodiments, the third information includes N bits, the N bits correspond to the N CSI-RS resources respectively, and each bit in the third information indicates whether a corresponding CSI-RS resource is configured with CBSR information.

In the above embodiments, each bit in the third information may indicate the CBSR configuration of the corresponding CSI-RS resource, thus effectively ensuring the reliability of indication.

In some embodiments in combination with the first aspect, in some embodiments, the N CSI-RS resources correspond sequentially to the N bits in the third information according to sizes of resource identifiers of the N CSI-RS resources.

In the above embodiments, an arrangement of the bits in the third information may be restricted based on the sizes of the resource identifiers of the CSI-RS resources, so that the terminal may more accurately and quickly determine whether the CSI-RS resources are configured with the CBSR based on the arrangement of the bits.

In some embodiments in combination with the first aspect, in some embodiments, each instance of CBSR information of the M instances of CBSR information includes a first information field, and the first information field indicates a CSI-RS resource corresponding to the instance of CBSR information.

In the above embodiments, the first information field may be added to the instance of CBSR information, and the first information field may be used to indicate the CSI-RS resource corresponding to the instance of CBSR information, thus reliably realizing the CBSR configuration.

In some embodiments in combination with the first aspect, in some embodiments, the first information field includes at least $\left⌈{log}_{2}N\right⌉$ bits.

In the above embodiments, an indication function of the first information field may be implemented with a minimal cost based on the above formula, thus effectively reducing the resource overhead.

In some embodiments in combination with the first aspect, in some embodiments, the second information includes N-M placeholders, the N-M placeholders correspond to N-M second CSI-RS resources respectively, and the second CSI-RS resources are different from the first CSI-RS resources; and each of the N-M placeholders indicates that a corresponding CSI-RS resource is not configured with CBSR information.

In the above embodiments, the placeholders may be used to indicate that the corresponding CSI-RS resources are not configured with the CBSR, which may effectively enable the terminal to know which CSI-RS resources are not configured with the CBSR.

In some embodiments in combination with the first aspect, in some embodiments, the N CSI-RS resources correspond sequentially to the M instances of CBSR information and the N-M placeholders according to sizes of resource identifiers of the N CSI-RS resources.

In the above embodiments, an arrangement of the placeholders and the instances of CBSR information may be restricted based on the resource identifiers of the CSI-RS resources, thereby enabling the terminal to determine whether the CSI-RS resources are configured with the CBSR and determine the CBSR information configured based on the arrangement of the placeholders and the instances of CBSR information and the resource identifiers of the CSI-RS resources.

In some embodiments in combination with the first aspect, in some embodiments, determining, by the terminal, the CBSR information corresponding to the M first CSI-RS resources includes: determining, by the terminal, the CBSR information corresponding to the M first CSI-RS resources according to a preset rule in a case where M equals N.

In the above embodiments, in a case where each of the CSI-RS resources is configured with the CBSR, the terminal may determine the CBSR information corresponding to each of the CSI-RS resources directly according to a default rule or a predefined rule without receiving the second information, thus effectively reducing the resource overhead.

In a second aspect, embodiments of the present disclosure provide a method for processing information, which includes: sending, by a network device, first information to a terminal, in which the first information is used to configure N CSI-RS resources, the N CSI-RS resources are configured for the terminal to receive CSI-RSs, the N CSI-RS resources include M first CSI-RS resources, and the M first CSI-RS resources are CSI-RS resources configured with CBSR information among the N CSI-RS resources, in which M is less than or equal to N, and N is an integer greater than or equal to 1.

In some embodiments in combination with the second aspect, in some embodiments, the method includes: sending, by the network device, second information to the terminal, in which the second information includes M instances of CBSR information and is configured to determine CBSR information corresponding to the M first CSI-RS resources.

In some embodiments in combination with the second aspect, in some embodiments, the M first CSI-RS resources correspond sequentially to the M instances of CBSR information according to sizes of resource identifiers of the M first CSI-RS resources.

In some embodiments in combination with the second aspect, in some embodiments, the second information further includes third information, or the method includes: sending, by the network device, third information to the terminal. The third information indicates the first CSI-RS resources.

In some embodiments in combination with the second aspect, in some embodiments, the third information includes N bits, the N bits correspond to the N CSI-RS resources respectively, and each bit in the third information indicates whether a corresponding CSI-RS resource is configured with CBSR information.

In some embodiments in combination with the second aspect, in some embodiments, the N CSI-RS resources correspond sequentially to the N bits in the third information according to sizes of resource identifiers of the N CSI-RS resources.

In some embodiments in combination with the second aspect, in some embodiments, each of the M instances of CBSR information includes a first information field, and the first information field indicates a CSI-RS resource corresponding to the instance of CBSR information.

In some embodiments in combination with the second aspect, in some embodiments, the first information field includes at least $\left⌈{log}_{2}N\right⌉$ bits.

In some embodiments in combination with the second aspect, in some embodiments, the second information includes N-M placeholders, the N-M placeholders correspond to N-M second CSI-RS resources respectively, and the second CSI-RS resources are different from the first CSI-RS resources; and each of the N-M placeholders indicates that a corresponding CSI-RS resource is not configured with CBSR information.

In some embodiments in combination with the second aspect, in some embodiments, the N CSI-RS resources correspond sequentially to the M instances of CBSR information and the N-M placeholders according to sizes of resource identifiers of the N CSI-RS resources.

In a third aspect, embodiments of the present disclosure provide a terminal, which includes: a transceiver module configured to receive first information sent by a network device, and the first information is used to configure N CSI-RS resources, and the N CSI-RS resources are configured for the terminal to receive CSI-RSs; and a processing module configured to determine CBSR information corresponding to M first CSI-RS resources, in which the M first CSI-RS resources are CSI-RS resources configured with CBSR information among the N CSI-RS resources, in which M is less than or equal to N, and N is an integer greater than or equal to 1.

In a fourth aspect, embodiments of the present disclosure provide a network device, which includes: a transceiver module configured to send first information, in which the first information is used to configure N CSI-RS resources, the N CSI-RS resources are configured for a terminal to receive CSI-RSs, the N CSI-RS resources include M first CSI-RS resources, and the M first CSI-RS resources are CSI-RS resources configured with CBSR information among the N CSI-RS resources, in which M is less than or equal to N, and N is an integer greater than or equal to 1.

In a fifth aspect, embodiments of the present disclosure provide a terminal, which includes: one or more processors; and a memory coupled to the one or more processors, and including executable instructions which, when executed by the one or more processors, cause the terminal to perform the method for processing information according to the first aspect.

In a sixth aspect, embodiments of the present disclosure provide a network device, which includes: one or more processors; and a memory coupled to the one or more processors, and including executable instructions which, when executed by the one or more processors, cause the network device to perform the method for processing information according to the second aspect.

In a seventh aspect, embodiments of the present disclosure provide a communication system, which includes: a terminal and a network device, in which the terminal is configured to perform the method according to optional implementations of the first aspect, and the network device is configured to perform the method according to optional implementations of the second aspect.

In an eighth aspect, embodiments of the present disclosure provide a storage medium for storing instructions. When the instructions are run on a communication device, the communication device is caused to perform the method according to optional implementations of the first aspect or the second aspect.

In a ninth aspect, embodiments of the present disclosure provide a program product. When the program product is executed by a communication device, the communication device is caused to perform the method according to optional implementations of the first aspect or the second aspect.

In a tenth aspect, embodiments of the present disclosure provide a computer program. When the computer program is run on a computer, the computer is caused to perform the method according to optional implementations of the first aspect or the second aspect.

In an eleventh aspect, embodiments of the present disclosure provide a chip or a chip system. The chip or the chip system includes a processing circuit, configured to perform the method according to optional implementations of the first aspect or the second aspect.

It may be understood that the terminal, the network device, the communication system, the storage medium, the program product, the computer program, the chip, or the chip system are all used to perform the methods in the embodiments of the present disclosure. Therefore, for beneficial effects they may achieve, reference may be made to the beneficial effects in the corresponding methods, which will not be repeated here.

Embodiments of the present disclosure provide the method for processing information, the terminal, the network device, the communication system, and the storage medium. In some embodiments, the terms such as method for processing information and method for configuring CBSR, communication method, etc., may be used interchangeably; the terms such as apparatus for processing information and apparatus for configuring CBSR, communication apparatus, etc., may be used interchangeably; and the terms such as system for processing information, communication system, etc., may be used interchangeably.

Embodiments of the present disclosure are not exhaustive, but are only illustrative, and are not intended to be a specific limitation on the protection scope of the present disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the orders of steps in a certain embodiment may be arbitrarily exchanged. In addition, optional implementations in a certain embodiment may be arbitrarily combined. In addition, respective embodiments may be arbitrarily combined, for example, some or all steps of different embodiments may be arbitrarily combined, and a certain embodiment may be arbitrarily combined with optional implementations of other embodiments.

In various embodiments of the present disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In the embodiments of the present disclosure, "a plurality of" means two or more.

In some embodiments, the terms such as "at least one of", "one or more", "a plurality of", "multiple", etc. may be used interchangeably.

In some embodiments, the terms such as "at least one of A or B", "A and/or B", "in a case, A; in another case, B", "in response to a case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the present disclosure are only used to distinguish different descriptive objects, and do not constitute limitations on the positions, orders, priorities, quantities or content of the descriptive objects. For the statement of the descriptive objects, reference may be made to the description in the context of the claims or embodiments, and it should not constitute redundant limitations due to the use of prefixes. For example, if the descriptive object is "field", the ordinal numbers before "field" in "first field" and "second field" do not limit the positions or orders of the "fields", and the terms "first" and "second" do not limit whether the "fields" they modify are in the same message, nor do they limit the sequence of the "first field" and the "second field". For another example, if the descriptive object is "level", the ordinal numbers before "level" in "first level" and "second level" do not limit the priorities of the "levels". For another example, the number of the descriptive objects is not limited by the ordinal number, and may be one or more. Taking "first apparatus" as an example, the number of the "apparatus" may be one or more. In addition, the objects modified by different prefixes may be the same or different. For example, if the descriptive object is "apparatus", "first apparatus" and "second apparatus" may be the same apparatus or different apparatuses, and their types may be the same or different. For another example, if the descriptive object is "information", "first information" and "second information" may be the same information or different information, and their contents may be the same or different.

In some embodiments, "including A", "containing A", "used to indicate/indicating A", and "carrying A" may be interpreted as directly carrying A or indirectly indicating A.

In some embodiments, the terms such as "time/frequency" and "time-frequency domain" mean a time domain and/or a frequency domain.

In some embodiments, the terms such as "in response to...", "in response to determining...", "in the case of/that...", "at the time of...", "when...", "if...", "provided/providing that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatuses, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as a device included in a network, for example, an access network device, a core network device, etc.

In some embodiments, the terms such as "access network device (AN device)", "radio access network (RAN) device", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be used interchangeably.

In some embodiments, the access network device, the core network device, or the network device may be replaced with the terminal. For example, the structure where communication between the access network device, the core network device or the network device and the terminal is replaced with communication between multiple terminals (e.g., device-to-device (D2D), vehicle-to-everything (V2X), etc.) may also be applied to various embodiments of the present disclosure. In this case, the terminal may also be configured to have all or part of the functions of the access network device. In addition, the terms such as "uplink" and "downlink" may be replaced with the terms (e.g., "sidelink") corresponding to the communication between the terminals. For example, uplink channels or downlink channels may be replaced with sidelink channels, and uplink links or downlink links may be replaced with sidelinks.

In some embodiments, the terminal may be replaced with the access network device, the core network device, or the network device. In this case, the access network device, the core network device, or the network device may also be configured to have all or part of the functions of the terminal.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

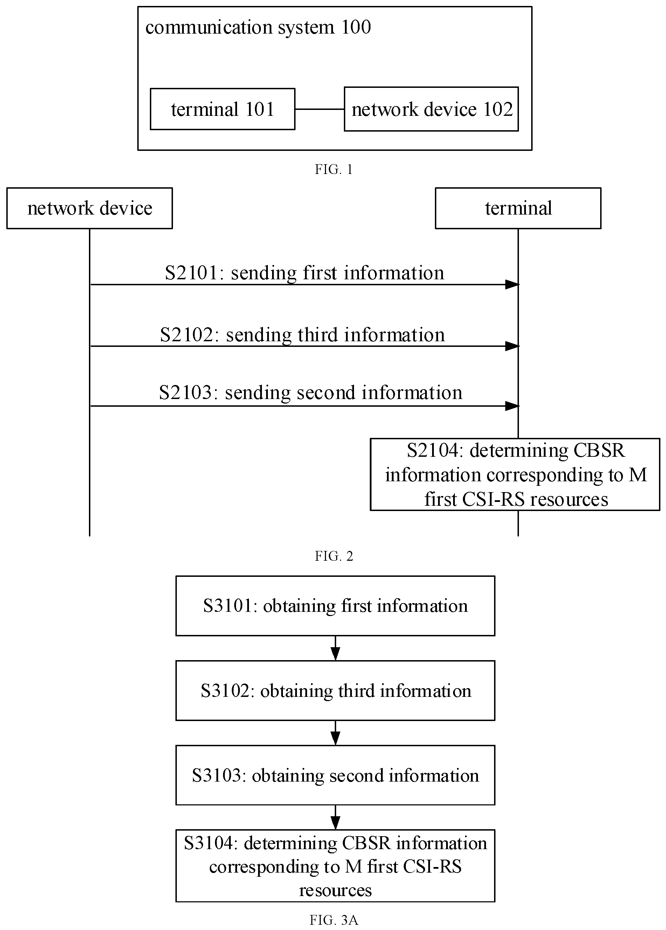

FIG. 1 is a schematic diagram of an architecture showing a communication system according to an embodiment of the present disclosure (only including a system diagram of inventive point related entities and their important counterparts, in which the quantity of entities corresponds to the quantity of entities involved in inventive points).

As shown in FIG. 1, a communication system 100 includes a terminal 101 and a network device 102. In some embodiments, the network device 102 may include at least one of an access network device or a core network device.

In some embodiments, the terminal 101 includes, for example, at least one of a mobile phone, a wearable device, an Internet of Things device, a vehicle with a communication function, a smart vehicle, a Pad, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., but is not limited to these.

In some embodiments, the access network device is, for example, a node or device that connects the terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (Wi-Fi) system, but is not limited to these.

In some embodiments, the technical solution of the present disclosure may be applied to an Open RAN architecture. In this case, an interface between or within access network devices involved in the embodiments of the present disclosure may be transformed into an internal interface of Open RAN. The procedures and information interactions between these internal interfaces may be implemented via software or program.

In some embodiments, the access network device may include a central unit (CU) and a distributed unit (DU). The CU may also be called a control unit. By adopting a CU-DU structure, protocol layers of the access network device may be separated. Functions of some protocol layers are centrally controlled by the CU, while functions of part or all of the remaining protocol layers are distributed in the DU, and the DU is centrally controlled by the CU, but the present disclosure is not limited to this.

In some embodiments, the core network device may be a device, including a first network element, a second network element, etc., or may be a plurality of devices or device groups, each of which includes all or part of the first network element, the second network element, etc. The network element may be virtual or physical. The core network includes, for example, at least one of an evolved packet core (EPC), 5G core network (5GCN), or a next generation core (NGC).

It may be understood that the communication system in the embodiments of the present disclosure is for more clearly illustrating the technical solutions in the embodiments of the present disclosure and does not constitute a limitation on the technical solutions in the embodiments of the present disclosure. Those skilled in the art may understand that with the evolution of system architectures and the emergence of new service scenarios, the technical solutions in the embodiments of the present disclosure are also applicable to similar technical problems.

The following embodiments of the present disclosure may be applied to the communication system 100 or part of the entities shown in FIG. 1, but the present disclosure is not limited to this. The entities shown in FIG. 1 are examples, and the communication system may include all or part of the entities in FIG. 1, or may include other entities than those shown in FIG. 1. The numbers and the forms of the entities are arbitrary. The entities may be physical or virtual. The connection relationships between the entities are examples. The entities may be connected or disconnected, and the connection may be in any manner, which may be a direct connection or an indirect connection, or may be a wired connection or a wireless connection.

The embodiments of the present disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN), a device-to-device (D2D) system, a machine-to-machine (M2M) system, an Internet of Things (IoT) system, vehicle-to-everything (V2X), systems using other communication methods, and next-generation systems expanded based on them. In addition, a plurality of systems may also be combined (for example, a combination of LTE or LTE-A and 5G, etc.) for application.

In some embodiments, in a scenario where a plurality of TRPs perform a coherent joint transmission (CJT), the network device may configure N_{TRP} CSI-RS resources for the terminal to measure downlink channel information from different TRPs to the terminal, where N_{TRP}>1. To reduce a beam interference among cells or terminals, the network device may configure corresponding CBSR for each CSI-RS resource, and the CBSR is used to restrict a selection of spatial domain (SD) basis vector by the terminal. In some embodiments, a network side may not configure CBSR for every CSI-RS resource, that is, some CSI-RS resources may not be configured with corresponding CBSR. The terminal may choose any SD basis vector in a case where a certain CSI-RS resource is not configured with corresponding CBSR.

It may be understood that a CSI-RS resource being configured with corresponding CBSR may mean that the network device configures corresponding CBSR information or CBSR sequence for the CSI-RS resource.

In some embodiments, in a case where the quantity of CSI-RS resources configured is larger than 1 (N_{TRP}>1), each CSI-RS resource may or may not be configured with the CBSR, which may cause the terminal to be unable to accurately select a spatial domain basis vector of each CSI-RS resource, thereby reducing the reliability of communication.

In some embodiments, a correspondence between configured CBSR and configured CSI-RS resources may be indicated via CBSR information, indication parameters, placeholders, etc. configured by the network device, so that the terminal may determine a mapping relationship between the configured CBSR and the configured CSI-RS resources, thereby solving problems that may exist in the above embodiments.

The quantity N_{TRP} of CSI-RS resources may be described as N in some embodiments described below.

FIG. 2 is a schematic interaction diagram showing a method for processing information according to an embodiment of the present disclosure. As shown in FIG. 2, embodiments of the present disclosure relate to the method for processing information, which includes the following steps.

In step S2101, a network device sends first information to a terminal.

In some embodiments, the first information is used to configure N CSI-RS resources. Optionally, the N CSI-RS resources may be configured for the terminal to receive CSI-RSs. Optionally, third information indicates one or more of time domain positions and frequency domain positions mapped from the N CSI-RS resources, CSI-RS resource identifiers, etc.

In some embodiments, the network device configures the N CSI-RS resources for the terminal via the first information. Optionally, the network device configures corresponding CBSR information for some or all of the N CSI-RS resources. Optionally, the quantity M of CSI-RS resources configured with the corresponding CBSR information is less than or equal to N.

In some embodiments, a value of N may be a positive integer greater than or equal to 1. For example, the network device may configure 4 CSI-RS resources for the terminal, and resource identifiers of these 4 CSI-RS resources may be 1, 2, 3, and 4 in sequence.

The value of N may be determined by the network device itself, for example, by the network device according to a protocol. Embodiments of the present disclosure do not limit the value of N. Furthermore, the quantity of ports for each CSI-RS resource may be, for example, 2, 4, 8, etc., and embodiments of the present disclosure do not limit this.

In some embodiments, the terminal receives the first information sent by the network device. Optionally, the terminal determines the N CSI-RS resources according to the first information.

It may be understood that after configuring the N CSI-RS resources, the network device may send CSI-RSs to the terminal at time-frequency domain positions corresponding to these resources. After receiving the first information, the terminal may receive the CSI-RSs at the time-frequency domain positions corresponding to these resources, or expect to receive the CSI-RSs at these time-frequency domain locations, according to the first information.

In some embodiments, the first information may be, for example, a CSI-RS resource mapping information element (CSI-RS-ResourceMapping IE) or one or more fields within the CSI-RS-ResourceMapping IE.

In some embodiments, the first information may be, for example, "resource configuration information" or "resource indication information", and the name of the first information is not limited in embodiments of the present disclosure.

In step S2103, the network device sends the third information to the terminal.

In some embodiments, the third information indicates first CSI-RS resources. Optionally, the third information indicates whether each CSI-RS resource of the CSI-RS resources is configured with CBSR information. Optionally, the third information indicates CSI-RS resources configured with CBSR and/or CSI-RS resources not configured with CBSR among the CSI-RS resources. Optionally, second information indicates whether a certain CSI-RS resource or each CSI-RS resource is configured with CBSR information. Optionally, the second information indicates resource identifiers corresponding to the first CSI-RS resources.

In some embodiments, the first CSI-RS resources are CSI-RS resources configured with corresponding CBSR among the N CSI-RS resources. Optionally, the quantity of the first CSI-RS resources is M. Optionally, the quantity of the first CSI-RS resources may be less than or equal to N, that is, a value of M may be less than or equal to N.

In other words, among the N CSI-RS resources, some CSI-RS resources may be configured with CBSR, and some CSI-RS resources may not be configured with CBSR; or all CSI-RS resources may be configured with corresponding CBSR.

In some embodiments, the third information may be determined by the network device according to CBSR configuration of the N CSI-RS resources. For example, after determining to configure CBSR for M first CSI-RS resources among the N CSI-RS resources, the network device generates the third information according to resource identifiers of the M first CSI-RS resources.

In some embodiments, the third information may be, for example, a bitmap. The bitmap (i.e., the third information) may include N bits. Optionally, each bit in the bitmap may correspond to a CSI-RS resource. Optionally, each bit in the bitmap indicates whether a corresponding CSI-RS resource is configured with corresponding CBSR.

For example, a value of the bit in the third information may be 0 or 1. In a case where the value of the bit is 1, the bit may indicate that the corresponding CSI-RS resource is configured with the corresponding CBSR, that is, the CSI-RS resource corresponding to the bit is the first CSI-RS resource. In a case where the value of the bit is 0, the bit may indicate that the corresponding CSI-RS resource is not configured with the corresponding CBSR.

In some embodiments, the N CSI-RS resources correspond sequentially to the N bits in the third information according to sizes of resource identifiers of the N CSI-RS resources. Optionally, the bits in the third information are arranged according to the sizes of the resource identifiers of the corresponding CSI-RS resources. The N CSI-RS resources may correspond sequentially to the N bits in the third information in an ascending order, and may also correspond sequentially to the N bits in the third information in a descending order, which is not limited in embodiments of the present disclosure.

Taking the ascending order as an example, a CSI-RS resource with a smallest resource identifier corresponds to a least significant bit (LSB) in the third information, and a CSI-RS resource with a largest resource identifier corresponds to a most significant bit (MSB) in the third information.

For example, the network device configures 4 CSI-RS resources having resource identifiers of 1, 2, 3, and 4 respectively. A CSI-RS resource with the resource identifier of 1 and a CSI-RS resource with the resource identifier of 3 are configured with CBSR. The third information may be a bitmap with 4 bits, and the 4 bits correspond sequentially to the CSI-RS resources with the resource identifiers of 1, 2, 3, and 4. Values of a first bit and a third bit in the bitmap may be 1, and values of a second bit and a fourth bit in the bitmap may be 0. For example, the bitmap may be shown in Table 1 below:

**Table 1**

| | | | |
|---|---|---|---|
| 1 | 0 | 1 | 0 |

In some embodiments, the terminal receives the third information. Optionally, the terminal determines the first CSI-RS resources according to the third information. Optionally, the terminal determines resource identifiers corresponding to the first CSI-RS resources according to the third information.

For example, following the example corresponding to Table 1 above, after receiving the third information, the terminal may determine, based on an order of the sizes of the resource identifiers of the CSI-RS resources, that the CSI-RS resource with the resource identifier of 1 and the CSI-RS resource with the resource identifier of 3 are configured with CBSR, and a CSI-RS resource with the resource identifier of 2 and a CSI-RS resource with the resource identifier of 4 are not configured with CBSR. Furthermore, it may be determined that the quantity M of the first CSI-RS resources is equal to 2, and the first CSI-RS resources are the CSI-RS resource with the resource identifier of 1 and the CSI-RS resource with the resource identifier of 3 respectively.

In some embodiments, the third information may be "CBSR configuration information", "bitmap information", etc., which is not limited in embodiments of the present disclosure.

In step S2102, the network device sends the second information to the terminal.

In some embodiments, the second information includes M instances of CBSR information. Optionally, the second information indicates CBSR information corresponding to the first CSI-RS resources. Optionally, the second information indicates the CBSR information corresponding to the first CSI-RS resources and indicates that second CSI-RS resources are not configured with CBSR information.

Optionally, the CBSR information may be a bit string. Optionally, the CBSR information may include a CBSR sequence, and the CBSR sequence may be a bit string. Optionally, different CBSR restriction may correspond to different bit counts of the CBSR information or CBSR sequence.

For example, the CBSR information may include a bit string of any bit count, such as 16, 43, 32, 59, 48, etc. The bit count and the value of each bit in each instance of CBSR information may be configured by the network device, and specific values are not limited in the embodiments of the present disclosure.

Optionally, the M instances of CBSR information may form a linked list according to an order of the M instances of CBSR information, such as "codebookSubsetRestrictionList" in the related art, and a bit count of the linked list may be a sum of bit counts of M bit strings in the M instances of CBSR information.

In some embodiments, the second information may be determined by the network device according to CBSR configuration of the N CSI-RS resources. For example, after determining to configure CBSR for M first CSI-RS resources in the N CSI-RS resources, the network device determines the M instances of CBSR information for these M first CSI-RS resources and generates the second information according to a correspondence between the CSI-RS resources and the instances of CBSR information.

In some embodiments, the second information may include the M instances of CBSR information. Optionally, the M instances of CBSR information correspond to the M first CSI-RS resources. For example, the value of N is 4, two CSI-RS resources are configured with CBSR, the second information may include two instances of CBSR information, and the two instances of CBSR information may correspond to the CSI-RS resource with the resource identifier of 1 and the CSI-RS resource with the resource identifier of 3, respectively. That is, the CSI-RS resource with the resource identifier of 1 and the CSI-RS resource with the resource identifier of 3 are the first CSI-RS resources.

In some embodiments, the M first CSI-RS resources correspond sequentially to the M instances of CBSR information according to sizes of resource identifiers of the M first CSI-RS resources. Optionally, the M instances of CBSR information are arranged sequentially according to the sizes of the resource identifiers of the M first CSI-RS resources corresponding to the M instances of CBSR information.

The M first CSI-RS resources may correspond sequentially to the M instances of CBSR information in an ascending order of the sizes of the resource identifiers of the M first CSI-RS resources. Correspondingly, the M instances of CBSR information are arranged in an ascending order of the sizes of the resource identifiers of the corresponding CSI-RS resources. Alternatively, the M first CSI-RS resources may correspond sequentially to the M instances of CBSR information in a descending order of the sizes of the resource identifiers of the M first CSI-RS resources. Correspondingly, the M instances of CBSR information are arranged in a descending order of the sizes of the resource identifiers of the corresponding CSI-RS resources. Embodiments of the present disclosure do not limit this.

Taking a scheme in the ascending order as an example, in a case where the second information includes 2 instances of CBSR information, i.e., CBSR-1 and CBSR-2 in sequence, and the first CSI-RS resources include a CSI-RS resource with a resource identifier of 1 and a CSI-RS resource with a resource identifier of 4, the CSI-RS resource with the resource identifier of 1 may correspond to CBSR-1, and the CSI-RS resource with the resource identifier of 4 may correspond to CBSR-2.

Optionally, the M first CSI-RS resources may be determined by the terminal according to the third information. Optionally, the resource identifiers of the M first CSI-RS resources may be determined according to the third information. For example, the terminal may determine which resource identifiers correspond to CSI-RS resources that are configured with CBSR according to the third information. Referring to Table 1 above, the terminal may determine that the resource identifiers of the first CSI-RS resources include 1 and 3.

For example, the network device configures 4 CSI-RS resources for the terminal. The terminal determines, according to the third information, that the first CSI-RS resources among the 4 CSI-RS resources include the CSI-RS resource with the resource identifier of 1 and the CSI-RS resource with the resource identifier of 3. Furthermore, the second information includes CBSR information 1 and CBSR information 2 in sequence. In this way, the terminal may determine that the CSI-RS resource with the resource identifier of 1 corresponds to the CBSR information 1, and the CSI-RS resource with the resource identifier of 3 corresponds to the CBSR information 2.

In some embodiments, the quantity of the first CSI-RS resources is equal to N (i.e., the value of N is equal to the value of M), the N instances of CBSR information are arranged according to the sizes of the resource identifiers of the corresponding CSI-RS resources, and the N CSI-RS resources correspond sequentially to the N instances of CBSR information according to the sizes of the resource identifiers of the N CSI-RS resources.

In this embodiment, each of the N CSI-RS resources is configured with corresponding CBSR, and the second information may include the CBSR information corresponding to each CSI-RS resource.

The CBSR information may be arranged in an ascending order of the sizes of the resource identifiers of the corresponding CSI-RS resources. Correspondingly, the CSI-RS resources correspond sequentially to the CBSR information in an ascending order of the sizes of the resource identifiers of the CSI-RS resources. Alternatively, the CBSR information may be arranged in a descending order of the sizes of the resource identifiers of the corresponding CSI-RS resources. Correspondingly, the CSI-RS resources correspond sequentially to the CBSR information in a descending order of the sizes of the resource identifiers of the CSI-RS resources. Embodiments of the present disclosure do not limit this.

For example, taking a scheme in the ascending order as an example, in a case where the network device configures 4 CSI-RS resources having resource identifiers of 1, 2, 3, and 4 respectively, the second information may include 4 instances of CBSR information. A first instance of CBSR information corresponds to the CSI-RS resource with the resource identifier of 1, and a last instance of CBSR information corresponds to the CSI-RS resource with the resource identifier of 4. Correspondingly, the terminal may determine the CBSR information corresponding to each CSI-RS resource based on the order of the sizes of the resource identifiers of the CSI-RS resources.

In some embodiments, each instance of CBSR information of the M instances of CBSR information includes a first information field. Optionally, the M instances of CBSR information include M first information fields respectively. Optionally, the first information field indicates a CSI-RS resource corresponding to the instance of CBSR information.

For example, in a case where the first information field in one instance of CBSR information may indicate that a resource identifier of a CSI-RS resource corresponding to the instance of CBSR information is 3, it may be determined that the CSI-RS resource with the resource identifier of 3 is configured with CBSR and corresponds to the instance of CBSR information.

Optionally, the first information field includes at least $\left⌈{log}_{2}N\right⌉$ bits. Optionally, the first information field may be in a high bit of the instance of CBSR information, or in a low bit of the instance of CBSR information, or in any preset position of the instance of CBSR information. Embodiments of the present disclosure do not limit this.

For example, taking an example that the first information field is at the low bit of the instance of CBSR information, in a case where the network device configures 4 CSI-RS resources, that is, the value of N is 4, 2 bits may be added to each instance of CBSR information in the second information to indicate a CSI-RS resource corresponding to each instance of CBSR information. For example, the second information includes CBSR information 1 and CBSR information 2, first two bits of the CBSR information 1 have values of 01, and first two bits of the CBSR information 2 have values of 11, it may be determined that the CBSR information 1 corresponds to the CSI-RS resource with the resource identifier of 2, and the CBSR information 2 corresponds to the CSI-RS resource with the resource identifier of 4.

Alternatively, in another example, in a case where ${B}_{0}^{0}$ represents the first information field in the instance of CBSR information, let ${B}_{0}^{0}$ represent LSB and ${B}_{0}^{1}$ represent MSB, then ${B}_{0} = {B}_{0}^{0} {B}_{0}^{1} = 00$ represents a first CSI-RS resource, that is, a CSI-RS resource with a smallest resource identifier; and ${B}_{0} = {B}_{0}^{0} {B}_{0}^{1} = 01$ represents a third CSI-RS resource, that is, the CSI-RS resource with the resource identifier of 3.

In some embodiments, the second information further includes N-M placeholders, and a value of N-M may be K. Optionally, the N-M placeholders correspond to N-M second CSI-RS resources respectively. The second CSI-RS resources are different from the first CSI-RS resources. Optionally, the second CSI-RS resources are CSI-RS resources not configured with CBSR information. Optionally, the placeholders indicate that corresponding CSI-RS resources are not configured with CBSR.

It may be understood that a sum of the quantity of CSI-RS resources not configured with CBSR and the quantity of CSI-RS resources configured with CBSR may be the same as the quantity of CSI-RS resources.

For example, in a case where the second information includes three placeholders and one instance of CBSR information, the network device configures 4 CSI-RS resources, i.e., CSI-RS resource 1 to CSI-RS resource 4, and the three placeholders correspond to the CSI-RS resource 1, the CSI-RS resource 2 and the CSI-RS resource 3 respectively, it may be determined that the CSI-RS resource 1, the CSI-RS resource 2 and the CSI-RS resource 3 are not configured with corresponding CBSR information, and the one instance of CBSR information described above corresponds to the CSI-RS resource 4.

Optionally, the N CSI-RS resources correspond sequentially to the M instances of CBSR information and the N-M placeholders according to the sizes of the resource identifiers of the N CSI-RS resources. Optionally, the N-M placeholders and the M instances of CBSR information are arranged according to sizes of resource identifiers of corresponding CSI-RS resources.

The N-M placeholders and the M instances of CBSR information may be arranged in an ascending order of the sizes of the resource identifiers of the corresponding CSI-RS resources. Correspondingly, the N CSI-RS resources correspond sequentially to the M instances of CBSR information and the N-M placeholders in an ascending order of the sizes of the resource identifiers of the N CSI-RS resources. Alternatively, the N-M placeholders and the M instances of CBSR information may be arranged in a descending order of the sizes of the resource identifiers of the corresponding CSI-RS resources. Correspondingly, the N CSI-RS resources correspond sequentially to the M instances of CBSR information and the N-M placeholders in a descending order of sizes of the resource identifiers of the N CSI-RS resources. Embodiments of the present disclosure do not limit this.

For example, in a case where the network device configures 4 CSI-RS resources, i.e., CSI-RS resource 1 to CSI-RS resource 4 in an ascending order of resource identifiers, the CSI-RS resource 1 and the CSI-RS resource 3 are not configured with CBSR, and the CSI-RS resource 2 and the CSI-RS resource 4 are configured with CBSR, the second information may include 2 placeholders and 2 instances of CBSR information, which are arranged in an order of placeholder 1/CBSR information 1/placeholder 2/CBSR information 2, in which the placeholder 1 corresponds to the CSI-RS resource 1, the CBSR information 1 corresponds to the CSI-RS resource 2, the placeholder 2 corresponds to the CSI-RS resource 3, and the CBSR information 2 corresponds to the CSI-RS resource 4. In this way, the terminal may determine that the CSI-RS resource 1 and the CSI-RS resource 3 are not configured with CBSR and determine that the CSI-RS resource 2 and the CSI-RS resource 4 respectively correspond to the CBSR information 1 and the CBSR information 2 according to the second information and based on the order of the sizes of the resource identifiers of the CSI-RS resources.

In some embodiments, the second information may be, for example, "CodebookConfig-r18", or a field in this information element, or any other information element. Optionally, the second information and the second information may be a same information element or signaling or different information elements or signaling, for example, may be different fields in the same information element, or may also be sent via two instances of signaling respectively. For example, the second information and the second information may be two fields in "CodebookConfig-r18". The second information may be, for example, a field "n1-n2-codebookSubsetRestrictionList-r18" in "CodebookConfig-r18", and the second information may be another field in "CodebookConfig-r18".

In some embodiments, the second information may be "CBSR sequence information", "codebook indication information", "CBSR configuration information", etc., and the name of the second information is not limited in embodiments of the present disclosure.

In step S2104, the terminal determines the CBSR information corresponding to the M first CSI-RS resources.

In some embodiments, the terminal receives the second information and determines the CBSR information corresponding to the M first CSI-RS resources according to the second information. Optionally, the terminal determines the CSI-RS resources corresponding to the M instances of CBSR information in the second information.

In some embodiments, referring to the description in step S2103, since the content included in the second information differs in different optional implementations, the terminal may determine the CBSR information corresponding to the M first CSI-RS resources according to the second information in a variety of different optional implementations.

In order to enable those skilled in the art to better understand the various optional implementations provided by embodiments of the present disclosure, embodiments of the present disclosure also include following optional embodiments.

In embodiment 1, the terminal receives the second information sent by the network device and determines CBSR information corresponding to the N CSI-RS resources according to the second information.

The second information includes N instances of CBSR information, which are arranged sequentially in an ascending order of the sizes of the resource identifiers of the N CSI-RS resources. The terminal determines the CBSR information corresponding to each CSI-RS resource according to the order of the sizes of the resource identifiers of the N CSI-RS resources.

In embodiment 2, the terminal receives the third information and the second information sent by the network device. The terminal determines M first CSI-RS resources according to the third information, for example, determining the resource identifier of each CSI-RS resource configured with CBSR, and determines the CSI-RS resources corresponding to the M instances of CBSR information in the second information according to the sizes of the resource identifiers of the M first CSI-RS resources.

The third information may be a bitmap of N bits, and the second information includes M instances of CBSR information. These M instances of CBSR information may be arranged sequentially in an ascending order of the sizes of the resource identifiers of the M first CSI-RS resources. The terminal may determine the CBSR information corresponding to each first CSI-RS resource according to the order of the sizes of the resource identifiers of the M first CSI-RS resources.

In embodiment 3, the terminal receives the second information, and according to the first information fields of the M instances of CBSR information in the second information, the terminal determines the CSI-RS resource corresponding to each instance of CBSR information of the M instances of CBSR information.

The second information includes the M instances of CBSR information, and each instance of CBSR information of the M instances of CBSR information includes the first information field with $\left⌈{log}_{2}N\right⌉$ bits.

In embodiment 4, the terminal receives the second information, and the terminal determines the CSI-RS resources corresponding to the M instances of CBSR information and the N-M placeholders in the second information according to the sizes of the resource identifiers of the N CSI-RS resources.

The second information may include the M instances of CBSR information and K placeholders, in which a sum of M and K equals N. The terminal determines the CBSR information or placeholder corresponding to each CSI-RS resource according to the order of the sizes of the resource identifiers of the N CSI-RS resources.

For specific optional implementations of the above embodiments 1 to 4, reference may be made to the relevant descriptions in steps S2101 to S2103, which will not be repeated here.

In some embodiments, the terminal determines the CBSR information corresponding to the M first CSI-RS resources according to a preset rule in a case where M equals N. Optionally, all the N CSI-RS resources are the first CSI-RS resources. Optionally, the terminal does not expect to receive the second information, or the terminal does not receive the second information.

Optionally, the network device and the terminal may configure the CBSR information for each CSI-RS resource by default, that is, the value of M is equal to the value of N. Alternatively, the network device may send indication information to indicate that each CSI-RS resource is configured with CBSR.

Optionally, each CSI-RS resource is configured with corresponding CBSR, and the terminal determines the CBSR information corresponding to each CSI-RS resource according to the preset rule. Optionally, the network device does not send the second information, and the terminal determines the CBSR information corresponding to each CSI-RS resource according to the preset rule.

It may be understood that a preset rule adopted by the network device when configuring corresponding CBSR information for each CSI-RS resource is same as a preset rule adopted by the terminal when determining the CBSR information corresponding to each CSI-RS resource.

The preset rule may be, for example, a rule predetermined in advance by a protocol, and may also be a rule indicated by an upper layer, indicated by the network device, or determined by the terminal itself, which is not limited in embodiments of the present disclosure.

In some embodiments, determining, by the terminal, the CBSR information corresponding to the M first CSI-RS resources according to the preset rule includes: determining, by the terminal, that the CBSR information corresponding to each of the M first CSI-RS resources is first CBSR information. Optionally, the first CBSR information is pre-configured CBSR information or CBSR information pre-agreed by a protocol.

For example, the preset rule may be a rule that the CBSR information corresponding to each CSI-RS resource is preset CBSR information. The network device may configure the CBSR information for each CSI-RS resource according to the preset rule, and the CBSR information configured is the preset CBSR information (e.g., the first CBSR information). The terminal may determine that CBSR corresponding to each CSI-RS resource is same and is the preset CBSR information according to the preset rule. The preset CBSR information may be indicated by the network device, and may also be determined by upper layer signaling or protocol.

Alternatively, the preset rule may be a rule that CBSR information corresponding to a CSI-RS resource with a resource identifier less than X is the first CBSR information, and CBSR information corresponding to a CSI-RS resource with a resource identifier greater than or equal to X is second CBSR information. The network device may configure CBSR information corresponding to each CSI-RS resource based on the preset rule. The terminal may determine, according to the preset rule, the CSI-RS resource with the resource identifier less than X corresponds to the first CBSR information, and the CSI-RS resource with the resource identifier greater than or equal to X corresponds to the second CBSR information. X may be indicated by the network device, and may also be determined by the terminal itself.

By adopting the optional implementations in embodiments of the present disclosure, the terminal may determine whether each CSI-RS resource configured by the network device is configured with CBSR, and which CBSR information corresponds to the CSI-RS resource configured with CBSR, based on the third information, the second information or the preset rule. This enables the terminal to more accurately select respective spatial domain basis vectors for CSI-RS reception and CSI transmission in different CSI-RS resources.

In some embodiments, names of information and the like are not limited to those specified in the embodiments. The terms such as "information", "message", "signal", "signaling", "report", "configuration", "indication", "instruction", "command", "channel", "parameter", "domain", "field", "symbol", "symbol/code element", "codebook", "codeword", "codepoint", "bit", "data", "program", "chip", etc., may be used interchangeably.

In some embodiments, the terms such as "codebook", "codeword", "precoding matrix", etc., may be used interchangeably. For example, a codebook may be a collection of one or more codewords/precoding matrices.

In some embodiments, the terms such as "uplink", "physical uplink", etc. may be used interchangeably; terms such as "downlink", "physical downlink", etc. may be used interchangeably; and terms such as "side", "sidelink", "sidelink communication", "direct link", "direct communication", "direct link communication" etc. may be used interchangeably.

In some embodiments, the terms such as "downlink control information (DCI)", "downlink (DL) assignment", "DL DCI", "uplink (UL) grant", "UL DCI", etc., may be used interchangeably.

In some embodiments, the terms such as "physical downlink shared channel (PDSCH)", "DL data" may be used interchangeably, and the terms such as "physical uplink shared channel (PUSCH)", "UL data" may be used interchangeably.

In some embodiments, the terms such as "radio", "wireless", "radio access network (RAN)", "access network (AN)", "RAN-based", etc. may be used interchangeably.

In some embodiments, the terms such as "moment", "point in time", "time", "time location", etc. may be used interchangeably, and the terms such as "duration", "segment", "time window", "window", "time", etc. may be used interchangeably.

In some embodiments, the terms such as "component carrier (CC)", "cell", "frequency carrier", "carrier frequency", etc. may be used interchangeably.

In some embodiments, the terms such as "acquire", "obtain", "get", "receive", "transmit", "bidirectional transmission", "send and/or receive" may be used interchangeably, and they may be interpreted as receiving from another entity, obtaining from a protocol, acquiring from an upper layer, obtaining via processing by itself, autonomously implementing, and other meanings.

In some embodiments, the terms such as "send", "transmit", "report", "deliver", "transmit", "bidirectional transmission", "send and/or receive" may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

In some embodiments, determination or judgment may be made by a value (0 or 1) represented by 1 bit, or by a true-false value (Boolean) represented by true or false, or by a comparison of numerical values (e.g., a comparison with a predetermined value), which is not limited herein.

In some embodiments, "not expecting to receive" may be interpreted as not receiving on time domain resources and/or frequency domain resources, or as not performing subsequent processing on data after receiving the data; and "not expecting to send" may be interpreted as not sending, or as sending but not expecting a receiver to respond to a sent content.

The communication method involved in embodiments of the present disclosure may include at least one of steps S2101 to S2104. For example, step S2102 may be implemented as an independent embodiment, step S2103 may be implemented as an independent embodiment, step S2104 may be implemented as an independent embodiment, steps S2101 and S2103 may be implemented as an independent embodiment, and steps S2102 and S2104 may be implemented as an independent embodiment, but the present disclosure is not limited to this.

In some embodiments, steps S2101 and S2102 may be executed in an exchanged order or simultaneously, and steps S2102 and S2103 may be executed in an exchanged order or simultaneously.

In some embodiments, steps S2101 to S2103 are optional, and one or more of these steps may be omitted or substituted in different embodiments.

In some embodiments, steps S2101, S2102, and S2104 are optional, and one or more of these steps may be omitted or substituted in different embodiments.

In some embodiments, reference may be made to other optional implementations described before or after the description corresponding to FIG. 2.

FIG. 3A is a schematic flowchart showing a method for processing information according to an embodiment of the present disclosure. As shown in FIG. 3A, embodiments of the present disclosure relate to the method for processing information (on a terminal side), which includes the following steps.

In step S3101, first information is obtained.

For optional implementations of step S3101, reference may be made to the optional implementations of step S2101 in FIG. 2 and other related parts in the embodiment involved in FIG. 2, which will not be repeated here.

In some embodiments, a terminal receives the first information sent by a network device or other entities, which is not limited herein.

In some embodiments, the terminal obtains the first information specified by a protocol.

In some embodiments, the terminal obtains the first information from one or more upper layers.

In some embodiments, the terminal performs processing to obtain the first information.

In some embodiments, step S3101 is omitted, and the terminal autonomously implements a function indicated by the first information, or the above function is set by default.

In step S3102, third information is obtained.

For optional implementations of step S3102, reference may be made to the optional implementations of step S2102 in FIG. 2 and other related parts in the embodiment involved in FIG. 2, which will not be repeated here.

In some embodiments, the terminal receives the third information sent by the network device or other entities, which is not limited herein.

In some embodiments, the terminal obtains the third information specified by a protocol.

In some embodiments, the terminal obtains the third information from one or more upper layers.

In some embodiments, the terminal performs processing to obtain the third information.

In some embodiments, step S3102 is omitted, and the terminal autonomously implements a function indicated by the third information, or the above function is set by default.

In step S3103, second information is obtained.

For optional implementations of step S3103, reference may be made to the optional implementations of step S2103 in FIG. 2 and other related parts in the embodiment involved in FIG. 2, which will not be repeated here.

In some embodiments, the terminal receives the second information sent by the network device or other entities, which is not limited herein.

In some embodiments, the terminal obtains the second information specified by a protocol.

In some embodiments, the terminal obtains the second information from one or more upper layers.

In some embodiments, the terminal performs processing to obtain the second information.

In some embodiments, step S3103 is omitted, and the terminal autonomously implements a function indicated by the second information, or the above function is set by default.

In step S3104, CBSR information corresponding to M first CSI-RS resources is determined.

For optional implementations of step S3104, reference may be made to the optional implementations of step S2104 in FIG. 2 and other related parts in the embodiment involved in FIG. 2, which will not be repeated here.

The communication method involved in embodiments of the present disclosure may include at least one of steps S3101 to S3104. For example, step S3102 may be implemented as an independent embodiment, step S3103 may be implemented as an independent embodiment, step S3104 may be implemented as an independent embodiment, steps S3101 and S3103 may be implemented as an independent embodiment, and steps S3102 and S3104 may be implemented as an independent embodiment, but the present disclosure is not limited to this.

In some embodiments, steps S3101 and S3102 may be executed in an exchanged order or simultaneously, and steps S3102 and S3103 may be executed in an exchanged order or simultaneously.

In some embodiments, steps S3101 to S3103 are optional, and one or more of these steps may be omitted or substituted in different embodiments.

In some embodiments, steps S3101, S3102, and S3104 are optional, and one or more of these steps may be omitted or substituted in different embodiments.

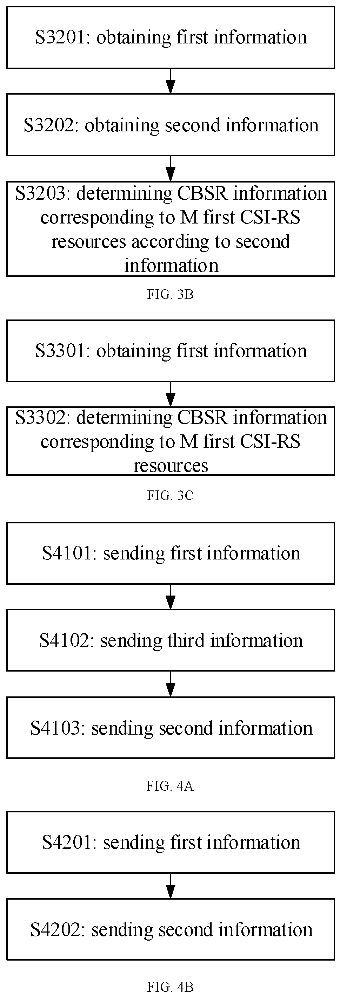

FIG. 3B is a schematic flowchart showing a method for processing information according to an embodiment of the present disclosure. As shown in FIG. 3B, embodiments of the present disclosure relate to the method for processing information (on a terminal side), which includes the following steps.

In step S3201, first information is obtained.

For optional implementations of step S3201, reference may be made to the optional implementations of step S2101 in FIG. 2 and step S3101 in FIG. 3A, and other related parts in the embodiments involved in FIG. 2 and FIG. 3A, which will not be repeated here.

In step S3202, second information is obtained.

For optional implementations of step S3202, reference may be made to the optional implementations of step S2103 in FIG. 2 and step S3103 in FIG. 3A, and other related parts in the embodiments involved in FIG. 2 and FIG. 3A, which will not be repeated here.

In step S3203, CBSR information corresponding to M first CSI-RS resources is determined according to the second information.

For optional implementations of step S3202, reference may be made to the optional implementations of step S2104 in FIG. 2 and step S3104 in FIG. 3A, and other related parts in the embodiments involved in FIG. 2 and FIG. 3A, which will not be repeated here.

The communication method involved in embodiments of the present disclosure may include at least one of steps S3201 to S3203. For example, step S3202 may be implemented as an independent embodiment, and step S3203 may be implemented as an independent embodiment.

In some embodiments, step S3201 is optional, and one or more of these steps may be omitted or substituted in different embodiments.

In some embodiments, step S3202 is optional, and one or more of these steps may be omitted or substituted in different embodiments.

FIG. 3C is a schematic flowchart showing a method for processing information according to an embodiment of the present disclosure. As shown in FIG. 3C, embodiments of the present disclosure relate to the method for processing information (on a terminal side), which includes the following steps.

In step S3301, first information is obtained.

For optional implementations of step S3201, reference may be made to the optional implementations of step S2101 in FIG. 2, step S3101 in FIG. 3A and step S3201 of FIG. 3B, and other related parts in the embodiments involved in FIG. 2, FIG. 3A, and FIG. 3B, which will not be repeated here.

In step S3302, CBSR information corresponding to M first CSI-RS resources is determined.

For optional implementations of step S3302, reference may be made to the optional implementations of step S2104 in FIG. 2, step S3104 in FIG. 3A and step S3203 in FIG. 3B, and other related parts in the embodiments involved in FIG. 2, FIG. 3A, and FIG. 3B, which will not be repeated here.

In some embodiments, the first information is used to configure N CSI-RS resources, and the N CSI-RS resources are configured for the terminal to receive CSI-RSs.

In some embodiments, the M first CSI-RS resources are CSI-RS resources configured with CBSR information among the N CSI-RS resources, in which M is less than or equal to N, and N is an integer greater than or equal to 1.

In some embodiments, determining, by the terminal, the CBSR information corresponding to the M first CSI-RS resources includes: receiving, by the terminal, second information sent by the network device, in which the second information includes M instances of CBSR information; and determining, by the terminal, the CBSR information corresponding to the M first CSI-RS resources according to the second information.

In some embodiments, the M first CSI-RS resources correspond sequentially to the M instances of CBSR information according to sizes of resource identifiers of the M first CSI-RS resources.

In some embodiments, the second information further includes third information, or the method includes: receiving, by the terminal, third information sent by the network device. The third information indicates the first CSI-RS resources.

In some embodiments, the third information includes N bits, the N bits correspond to the N CSI-RS resources respectively, and each bit in the third information indicates whether a corresponding CSI-RS resource is configured with CBSR information.

In some embodiments, the N CSI-RS resources correspond sequentially to the N bits in the third information according to sizes of resource identifiers of the N CSI-RS resources.

In some embodiments, each instance of CBSR information of the M instances of CBSR information includes a first information field, and the first information field indicates a CSI-RS resource corresponding to the instance of CBSR information.

In some embodiments, the first information field includes at least $\left⌈{log}_{2}N\right⌉$ bits.

In some embodiments, the second information includes N-M placeholders, the N-M placeholders correspond to N-M second CSI-RS resources respectively, and the second CSI-RS resources are different from the first CSI-RS resources. Each of the N-M placeholders indicates that a corresponding CSI-RS resource is not configured with CBSR information.

In some embodiments, the N CSI-RS resources correspond sequentially to the M instances of CBSR information and the N-M placeholders according to sizes of resource identifiers of the N CSI-RS resources.

In some embodiments, determining, by the terminal, the CBSR information corresponding to the M first CSI-RS resources includes: determining, by the terminal, the CBSR information corresponding to the M first CSI-RS resources according to a preset rule in a case where M equals N.

In some embodiments, determining, by the terminal, the CBSR information corresponding to the M first CSI-RS resources according to the preset rule includes:

determining, by the terminal, that the CBSR information corresponding to each of the M first CSI-RS resources is first CBSR information, in which the first CBSR information is pre-configured CBSR information or CBSR information pre-agreed by a protocol.

FIG. 4A is a schematic flowchart showing a method for processing information according to an embodiment of the present disclosure. As shown in FIG. 4A, embodiments of the present disclosure relate to the method for processing information (on a network device side), which includes the following steps.

In step S4101, first information is sent.

For optional implementations of step S4101, reference may be made to the optional implementations of step S2101 in FIG. 2 and other related parts in the embodiment involved in FIG. 2, which will not be repeated here.

In some embodiments, a network device sends the first information to a terminal or other entities, which is not limited herein.

In step S4102, third information is sent.

For optional implementations of step S4102, reference may be made to the optional implementations of step S2102 in FIG. 2 and other related parts in the embodiment involved in FIG. 2, which will not be repeated here.

In some embodiments, the network device sends the third information to the terminal or other entities, which is not limited herein.

In step S4103, second information is sent.

For optional implementations of step S4103, reference may be made to the optional implementations of step S2103 in FIG. 2 and other related parts in the embodiment involved in FIG. 2, which will not be repeated here.

In some embodiments, the network device sends the second information to the terminal or other entities, which is not limited herein.

The communication method involved in embodiments of the present disclosure may include at least one of steps S4101 to S4103. For example, step S4102 may be implemented as an independent embodiment, step S4103 may be implemented as an independent embodiment, steps S4101 and S4103 may be implemented as an independent embodiment, and steps S4102 and S4103 may be implemented as an independent embodiment, but the present disclosure is not limited to this.

In some embodiments, steps S4101 and S4102 may be executed in an exchanged order or simultaneously, and steps S4102 and S4103 may be executed in an exchanged order or simultaneously.

In some embodiments, steps S4101 and S4102 are optional, and one or more of these steps may be omitted or substituted in different embodiments.

In some embodiments, steps S4101 and S4103 are optional, and one or more of these steps may be omitted or substituted in different embodiments.

FIG. 4B is a schematic flowchart showing a method for processing information according to an embodiment of the present disclosure. As shown in FIG. 4B, embodiments of the present disclosure relate to the method for processing information (on a network device side), which includes the following steps.

In step S4201, first information is sent.

For optional implementations of step S4201, reference may be made to the optional implementations of step S2101 in FIG. 2 and step S4101 in FIG. 4A, and other related parts in the embodiments involved in FIG. 2 and FIG. 4A, which will not be repeated here.

In step S4202, second information is sent.

For optional implementations of step S4202, reference may be made to the optional implementations of step S2103 in FIG. 2 and step S4103 in FIG. 4A, and other related parts in the embodiments involved in FIG. 2 and FIG. 4A, which will not be repeated here.

The communication method involved in embodiments of the present disclosure may include at least one of steps S4201 to S4202. For example, step S4201 may be implemented as an independent embodiment, and step S4202 may be implemented as an independent embodiment.

In some embodiments, steps S4201 and S4202 may be executed in an exchanged order or simultaneously.

In some embodiments, step S4201 is optional, and one or more of these steps may be omitted or substituted in different embodiments.

In some embodiments, step S4202 is optional, and one or more of these steps may be omitted or substituted in different embodiments.

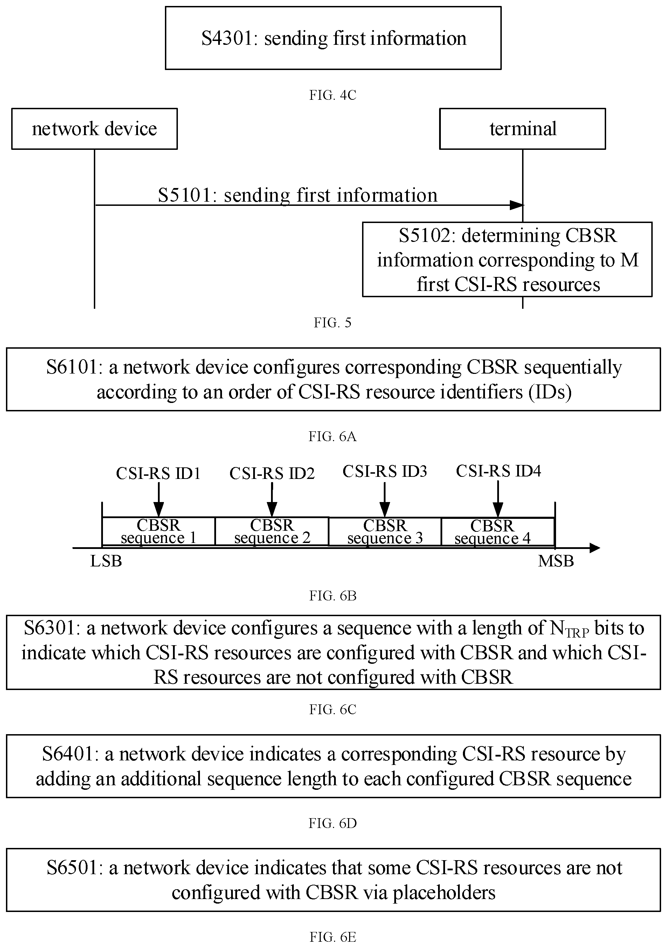

FIG. 4C is a schematic flowchart showing a method for processing information according to an embodiment of the present disclosure. As shown in FIG. 4C, embodiments of the present disclosure relate to the method for processing information (on a network device side), which includes the following steps.

In step S4301, first information is sent.

For optional implementations of step S4301, reference may be made to the optional implementations of step S2103 in FIG. 2, step S4103 in FIG. 4A and step S4202 in FIG. 4B, and other related parts in the embodiments involved in FIG. 2, FIG. 4A, and FIG. 4B, which will not be repeated here.

In some embodiments, the first information is used to configure N CSI-RS resources, the N CSI-RS resources are configured for the terminal to receive CSI-RSs, the N CSI-RS resources include M first CSI-RS resources, and the M first CSI-RS resources are CSI-RS resources configured with CBSR information among the N CSI-RS resources, in which M is less than or equal to N, and N is an integer greater than or equal to 1.

In some embodiments, the method includes: sending, by the network device, second information to the terminal, in which the second information includes M instances of CBSR information and is configured to determine CBSR information corresponding to the M first CSI-RS resources.

In some embodiments, the M first CSI-RS resources correspond sequentially to the M instances of CBSR information according to sizes of resource identifiers of the M first CSI-RS resources.

In some embodiments, the second information further includes third information, or the method includes: sending, by the network device, third information to the terminal. The third information indicates the first CSI-RS resources.

In some embodiments, the third information includes N bits, the N bits correspond to the N CSI-RS resources respectively, and each bit in the third information indicates whether a corresponding CSI-RS resource is configured with CBSR information.

In some embodiments, the N CSI-RS resources correspond sequentially to the N bits in the third information according to sizes of resource identifiers of the N CSI-RS resources.

In some embodiments, each of the M instances of CBSR information includes a first information field, and the first information field indicates a CSI-RS resource corresponding to the instance of CBSR information.

In some embodiments, the first information field includes at least $\left⌈{log}_{2}N\right⌉$ bits.

In some embodiments, the second information includes N-M placeholders, the N-M placeholders correspond to N-M second CSI-RS resources respectively, and the second CSI-RS resources are different from the first CSI-RS resources. Each of the N-M placeholders indicates that a corresponding CSI-RS resource is not configured with CBSR information.

In some embodiments, the N CSI-RS resources correspond sequentially to the M instances of CBSR information and the N-M placeholders according to sizes of resource identifiers of the N CSI-RS resources.

FIG. 5 is a schematic interaction diagram showing a method for processing information according to an embodiment of the present disclosure. As shown in FIG. 5, embodiments of the present disclosure relate to the method for processing information, which includes the following steps.

In step S5101, a network device sends first information to a terminal.

For optional implementations of step S5101, reference may be made to the optional implementations of step S2101 in FIG. 2, step S3101 in FIG. 3A, step S3201 in FIG. 3B, step S3301 in FIG. 3C, step S4101 in FIG. 4A, step S4201 in FIG. 4B and step S4301 in FIG. 4C, and other related parts in the embodiments involved in FIG. 2, FIG. 3A, FIG. 3B, FIG. 3C, FIG. 4A, FIG. 4B, and FIG. 4C, which will not be repeated here.

In step S5102, the terminal determines CBSR information corresponding to M first CSI-RS resources.

For optional implementations of step S5102, reference may be made to the optional implementations of step S2104 in FIG. 2, step S3104 in FIG. 3A, step S3203 in FIG. 3B and step S3302 in FIG. 3C, and other related parts in the embodiments involved in FIG. 2, FIG. 3A, FIG. 3B, FIG. 3C, FIG. 4A, FIG. 4B, and FIG. 4C, which will not be repeated here.

In some embodiments, the above methods may include methods described in embodiments of the above communication system side, terminal side, network device side, etc., which will not be repeated here.

FIG. 6A is a schematic flowchart showing a method for processing information according to an embodiment of the present disclosure. As shown in FIG. 6A, embodiments of the present disclosure relate to the method for processing information, which includes a following step.

In step S6101, a network device configures corresponding CBSR sequentially according to an order of CSI-RS resource identifiers (IDs).

In some embodiments, each CSI-RS resource is configured with CBSR independently.

In some embodiments, the network device configures the CBSR sequentially in an ascending order of the resource IDs, or configures the CBSR sequentially in a descending order of the resource IDs.

In some embodiments, it is defined that a CBSR sequence corresponding to a third CSI-RS resource is located in a low bit, and the CBSR sequences are arranged sequentially according to the order of the resource IDs. The third CSI-RS resource refers to a resource with a smallest CSI-RS resource ID, or a resource with a largest CSI-RS resource ID. An arrangement manner of least significant and most significant bits in the CBSR sequence corresponding to each resource is same as a traditional manner.

For example, it is assumed that a gNB in the network device configures *N_{TRP}* =4 CSI-RS resources for a terminal UE, IDs of the resources are 1, 2, 3 and 4 sequentially, and the quantity of ports for each resource is 8, in which the quantity of horizontal ports N1 = 2 and the quantity of vertical ports N2 = 2, and corresponding CBSR is configured for each CSI-RS resource, there are 4 CBSR sequences, and a length of the CBSR sequences is 43 bits. Each CBSR sequence is still defined as *B*=*B*₁*B*₂, and *B*₁ represents K candidate beam groups and *B*₂ represents a restriction indication for an amplitude corresponding to each beam in each beam group.

As shown in FIG. 6B, CSI-RS ID1 corresponding to a first CBSR sequence in 4 CBSR sequences is defined. The network device may configure a second CBSR sequence, a third CBSR sequence and a fourth CBSR sequence sequentially according to an order of sizes of CSI-RS IDs. The CBSR sequence corresponding to the CSI-RS ID1 is located in a low bit, and a CBSR sequence corresponding to CSI-RS ID4 is located in a high bit.

In some embodiments, bits included from LSB to MSB in FIG. 6B may be a type of second information in the above embodiments.

FIG. 6C is a schematic flowchart showing a method for processing information according to an embodiment of the present disclosure. As shown in FIG. 6C, embodiments of the present disclosure relate to the method for processing information, which includes a following step.

In step S6301, a network device configures a sequence with a length of N_{TRP} bits to indicate which CSI-RS resources are configured with CBSR and which CSI-RS resources are not configured with CBSR.

In some embodiments, a least significant bit (LSB) in the sequence of N_{TRP} bits corresponding to the third CSI-RS resource is defined, and bits in the sequences are sequentially indicated from LSB to MSB according to an order of sizes of the CSI-RS resource IDs. The third CSI-RS resource refers to the resource with the smallest CSI-RS resource ID, or the resource with the largest CSI-RS resource ID.

For example, it is assumed that a gNB configures *N_{TRP}* =4 CSI-RS resources for a UE, IDs of the resources are 1, 2, 3 and 4 sequentially, the quantity of ports for each resource is 8, in which N1 = 2 and N2 = 2, and the gNB only configures corresponding CBSR sequences for CSI-RS ID1 and CSI-RS ID3.

The gNB configures one bitmap sequence with a size of *N_{TRP}* = 4 bits for the UE to indicate which CSI-RS resources are configured with CBSR and which resources are not configured with CBSR. According to the assumption conditions, the indication information configured by the gNB for the UE is shown in Table 1 of the embodiment corresponding to FIG. 2.

In Table 1, "1" represents that a corresponding CSI-RS resource is configured with a CBSR sequence; otherwise, a corresponding CSI-RS resource is not configured with a CBSR sequence. The LSB in the sequence of *N_{TRP}* =4 bits corresponds to CSI-RS ID1, and the bits are indicated sequentially according to an order of value sizes of CSI-RS IDs, so that the MSB in the sequence of *N_{TRP}* =4 bits corresponds to CSI-RS ID4.

In some embodiments, the above sequence or bitmap with a length of N_{TRP} bits may be the third information in the above embodiments.

FIG. 6D is a schematic flowchart showing a method for processing information according to an embodiment of the present disclosure. As shown in FIG. 6D, embodiments of the present disclosure relate to the method for processing information, which includes a following step.

In step S6401, a network device indicates a corresponding CSI-RS resource by adding an additional sequence length of $\left⌈{log}_{2}{N}_{TRP}\right⌉$ bits to each configured CBSR sequence.

Optionally, in a case where the network device configures that *N_{TRP}* = 1, a sequence length of *B*₀ is empty, i.e., 0 bit.

In some embodiments, it is defined a newly added bit sequence is located in a low bit or high bit of an original configured CBSR sequence. For example, a sequence for configuring CBSR is defined as *B*=*B*₀*B*₁*B*₂, or *B*=*B*₁*B*₂*B*₀. The sequence length of *B*₀ is $\left⌈{log}_{2}{N}_{TRP}\right⌉$ bits, ${B}_{0}^{0}$ may be defined as an LSB, ${B}_{0}^{Q - 1}$ is defined as an MSB, and $Q = \left⌈{log}_{2}{N}_{TRP}\right⌉$, vice versa.

For example, it is assumed that the gNB configures *N_{TRP}* =4 CSI-RS resources for the UE, IDs of the resources are 1, 2, 3 and 4 sequentially, the quantity of ports for each resource is 8, in which N1 = 2 and N2 = 2, and the gNB only configures corresponding CBSR sequences for CSI-RS ID1 and CSI-RS ID3.

The $\left⌈{log}_{2}{N}_{TRP}\right⌉ = 2$ bits are added to the configured CBSR sequence to indicate independently which CSI-RS resource the CBSR sequence corresponds to. A sequence *B*₀ is added to a high bit or low bit in an original sequence *B*=*B*₁*B*₂. It's assumed that *B*₀ is added to the low bit, thus *B*=*B*₀*B*₁*B*₂. The CSI-RS resources are sorted in an ascending order of values of the CSI-RS resource IDs, i.e., a first CSI-RS resource, a second CSI-RS resource, a third CSI-RS resource, and a fourth CSI-RS resource are CSI-RS ID1, CSI-RS ID2, CSI-RS ID3, and CSI-RS ID4, respectively. Let ${B}_{0}^{0}$ be LSB and ${B}_{0}^{1}$ be MSB, then ${B}_{0} = {B}_{0}^{0} {B}_{0}^{1} = 00 = 00$ represents the first CSI-RS resource, i.e., the CSI-RS ID1; and ${B}_{0} = {B}_{0}^{0} {B}_{0}^{1} = 01$ represents the third CSI-RS resource, i.e., the CSI-RS ID3.

In some embodiments, the above *B*₀ may be the first information field in the above embodiments.

In some embodiments, a sequence *B*=*B*₀*B*₁*B*₂ may be a CBSR sequence in a type of first information in the above embodiments.

FIG. 6E is a schematic flowchart showing a method for processing information according to an embodiment of the present disclosure. As shown in FIG. 6E, embodiments of the present disclosure relate to the method for processing information, which includes a following step.

In step S6501, a network device indicates that some CSI-RS resources are not configured with CBSR via placeholders.

For example, it is assumed that a gNB configures *N_{TRP}* =4 CSI-RS resources for a UE, IDs of the resources are 1, 2, 3 and 4 respectively, the quantity of ports for each resource is 8, in which N1 = 2 and N2 = 2, and the gNB only configures corresponding CBSR sequences for CSI-RS ID1 and CSI-RS ID3. A configuration method may be shown in Table 2:

**Table 2**

| | | | |
|---|---|---|---|
| CBSR sequence 1 | # | CBSR sequence 3 | # |

Referring to Table 2, symbol "#" in the above table represents a placeholder which represents that a corresponding CSI-RS resource is not configured with CBSR.

In some embodiments, the content shown in Table 2 may be a type of first information in the above embodiments.

In embodiments of the present disclosure, some or all of steps and their optional implementations may be arbitrarily combined with some or all of steps in other embodiments, and may also be arbitrarily combined with optional implementations of other embodiments.

The embodiments of the present disclosure also provide an apparatus for implementing any one of the above methods. For example, an apparatus is provided, including units or modules for implementing the steps performed by the terminal in any one of the above methods. For another example, another apparatus is provided, including units or modules for implementing steps performed by the network device (for example, an access network device, a core network function node, a core network device, a terminal, a network device, etc.) in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the above apparatuses. The processor may be a general-purpose processor, such as a central processing unit (CPU) or a microprocessor, and the memory may be internal or external to the apparatus. Alternatively, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units or modules are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of software called by the processor, or fully implemented in the form of the hardware circuit, or partially implemented in the form of software called by the processor while the remaining part is implemented in the form of the hardware circuit.

In the embodiments of the present disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of a hardware circuit. The logical relationship of the hardware circuit is fixed or reconstructed, for example, the processor is a hardware circuit implemented by the ASIC or the PLD, such as the FPGA. In a reconstructible hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

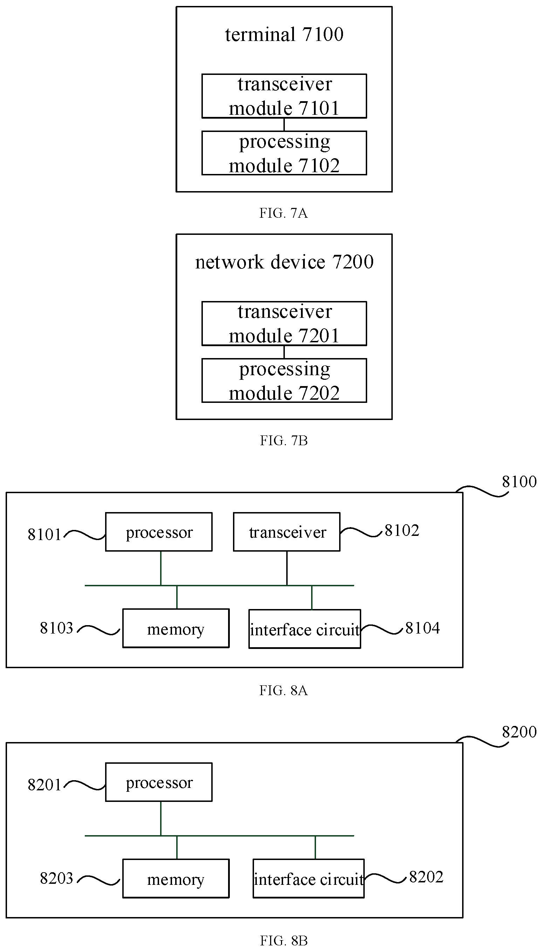

FIG. 7A is a block diagram of a terminal provided according to an embodiment of the present disclosure. As shown in FIG. 7A, a terminal 7100 may include at least one of: a transceiver module 7101, a processing module 7102, etc. In some embodiments, the above transceiver module 7101 is configured to receive first information sent by a network device, the first information is used to configure N CSI-RS resources, and the N CSI-RS resources are configured for the terminal to receive CSI-RSs. The above processing module 7202 is configured to determine CBSR information corresponding to M first CSI-RS resources, and the M first CSI-RS resources are CSI-RS resources configured with CBSR information among the N CSI-RS resources, in which M is less than or equal to N, and N is an integer greater than or equal to 1. Optionally, the above transceiver module 7101 is configured to execute at least one of the communication steps such as sending and/or receiving (e.g., step S2101, step S2102, step S2103, but not limited herein) performed by the terminal in any of the above methods, which will not be repeated here. Optionally, the above processing module 7102 is configured to execute at least one of the other steps (e.g., step S2104) performed by the terminal in any of the above methods, which will not be repeated here.

FIG. 7B is a block diagram of a network device provided according to an embodiment of the present disclosure. As shown in FIG. 7B, a network device 7200 may include at least one of: a transceiver module 7201, a processing module 7202, etc. In some embodiments, the above transceiver module 7201 sends first information to a terminal, the first information is used to configure N CSI-RS resources, the N CSI-RS resources are configured for the terminal to receive CSI-RSs, the N CSI-RS resources include M first CSI-RS resources, and the M first CSI-RS resources are CSI-RS resources configured with CBSR information among the N CSI-RS resources, in which M is less than or equal to N, and N is an integer greater than or equal to 1. Optionally, the above transceiver module 7201 is configured to execute at least one of the communication steps such as sending and/or receiving (e.g., step S2101, step S2102, step S2103, but not limited herein) performed by the network device in any of the above methods, which will not be repeated here. Optionally, the above processing module 7202 is configured to execute at least one of the other steps performed by the network device in any of the above methods, which will not be repeated here.

In some embodiments, the transceiver module may include a sending module and/or a receiving module. The sending module and the receiving module may be separate or integrated together. Optionally, the transceiver module may be interchanged with a transceiver.

In some embodiments, the processing module may be one module or may include a plurality of sub-modules. Optionally, the plurality of sub-modules respectively execute all or part of the steps required to be performed by the processing module. Optionally, the processing module may be interchanged with a processor.

FIG. 8A is a block diagram of a communication device 8100 provided according to an embodiment of the present disclosure. The communication device 8100 may be a network device (e.g., an access network device, a core network device, etc.), or a terminal (e.g., a UE, etc.), or a chip, chip system, or processor, etc., that supports the network device to implement any one of the above methods, or a chip, chip system, or processor, etc., that supports the terminal to implement any one of the above methods. The communication device 8100 may be used to implement the methods in the above method embodiments. For details, reference may be made to the descriptions in the above method embodiments.

As shown in FIG. 8A, a communication device 8100 may include one or more processors 8101. The processor 8101 may be a general-purpose processor or a special-purpose processor. For example, it may be a baseband processor or a central processing unit. The baseband processor may be used to process communication protocols and communication data, and the central processing unit may be used to control communication devices (such as base stations, baseband chips, terminals, terminal chips, DUs or CUs, etc.) to execute computer programs and process data of computer programs. Optionally, the communication device 8100 is used to perform any one of the above methods. Optionally, one or more processors 8101 are used to call the instructions to cause the communication device 8100 to perform any one of the above methods.

In some embodiments, the communication device 8100 further includes one or more transceivers 8102. When the communication device 8100 includes one or more transceivers 8102, the transceiver 8102 performs at least one of the communication steps such as sending and/or receiving (e.g., steps S2101, S2102, and S2103, but not limited herein) in the above methods and the processor 8101 performs at least one of the other steps (e.g., step S2104, but not limited herein). In an optional embodiment, the transceiver may include a receiver and/or a transmitter, which may be separate or integrated together. Optionally, the terms such as transceiver, transceiving unit, transceiving machine, transceiving circuit, interface circuit, and interface may be used interchangeably; the terms such as transmitter, transmitting unit, transmitting machine, and transmitting circuit may be used interchangeably; and the terms such as receiver, receiving unit, receiving machine, and receiving circuit may be used interchangeably.

In some embodiments, the communication device 8100 further includes one or more memories 8103 for storing data. Optionally, all or part of the memories 8103 may be located outside the communication device 8100. In an optional embodiment, the communication device 8100 may include one or more interface circuits 8104. Optionally, the interface circuit 8104 is connected to the memory 8102. The interface circuit 8104 may be used to receive data from the memory 8102 or other devices, and may be used to send data to the memory 8102 or other devices. For example, the interface circuit 8104 may read data stored in the memory 8102 and send the data to the processor 8101.

The communication device 8100 in the description of the above embodiments may be a network device or a terminal, but the scope of the communication device 8100 described in the present disclosure is not limited herein, and the structure of the communication device 8100 may not be limited by FIG. 8A. The communication device may be a stand-alone device or may be part of a large device. For example, the communication device may be: (1) a stand-alone IC, a chip, or a chip system or subsystem; (2) a collection of ICs including one or more ICs, in some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 8B is a block diagram of a chip 8200 provided according to an embodiment of the present disclosure. For the case where the communication device 8100 may be a chip or a chip system, reference may be made to the block diagram of the chip 8200 shown in FIG. 8B, which is not limited herein.

The chip 8200 includes one or more processors 8201. The chip 8200 is used to perform any one of the above methods.

In some embodiments, the chip 8200 further includes one or more interface circuits 8202. Optionally, the terms such as interface circuit, interface, and transceiver pin may be used interchangeably. In some embodiments, the chip 8200 further includes one or more memories 8203 for storing data. Optionally, all or part of the memories 8203 may be located outside of the chip 8200. Optionally, the interface circuit 8202 is connected to the memory 8203. The interface circuit 8202 may be used to receive data from the memory 8203 or other devices, and the interface circuit 8202 may be used to send data to the memory 8203 or other devices. For example, the interface circuit 8202 may read data stored in the memory 8203 and send the data to the processor 8201.

In some embodiments, the interface circuit 8202 performs at least one of the communication steps such as sending and/or receiving (e.g., steps S2101, S2102, and S2103, but not limited herein) in the above method. The interface circuit 8202 performing the communication steps such as sending and/or receiving in the above method means that the interface circuit 8202 performs data interaction between the processor 8201, the chip 8200, the memory 8203 or the transceiver device. In some embodiments, the processor 8201 performs at least one of the other steps (e.g., step S2104, but not limited herein).

The modules and/or devices described in the various embodiments, such as virtual devices, physical devices, and chips, may be combined or separated arbitrarily as needed. Optionally, some or all of the steps may be performed collaboratively by a plurality of modules and/or devices, which is not limited herein.

The present disclosure also provides a storage medium for storing instructions. When the instructions are run on the communication device 8100, the communication device 8100 is caused to implement any one of the above methods. Optionally, the storage medium is an electronic storage medium. Optionally, the storage medium is a computer-readable storage medium, but it is not limited herein, and it may also be a storage medium readable by other devices. Optionally, the storage medium may be a non-transitory storage medium, but it is not limited herein, and it may also be a transitory storage medium.

The present disclosure also provides a program product. When the program product is executed by the communication device 8100, the communication device 8100 is caused to implement any one of the above methods. Optionally, the program product is a computer program product.

The present disclosure also provides a computer program. When the computer program is executed on a computer, the computer is caused to implement any one of the above methods.

## Claims

1. A method for processing information, comprising:
receiving, by a terminal, first information sent by a network device, wherein the first information is used to configure N channel state information-reference signal (CSI-RS) resources, and the N CSI-RS resources are configured for the terminal to receive CSI-RSs; and
determining, by the terminal, codebook subset restriction (CBSR) information corresponding to M first CSI-RS resources, wherein the M first CSI-RS resources are CSI-RS resources configured with CBSR information among the N CSI-RS resources, wherein M is less than or equal to N, and N is an integer greater than or equal to 1.

2. The method according to claim 1, wherein determining, by the terminal, the CBSR information corresponding to the M first CSI-RS resources comprises:
receiving, by the terminal, second information sent by the network device, wherein the second information comprises M instances of CBSR information; and
determining, by the terminal, the CBSR information corresponding to the M first CSI-RS resources according to the second information.

3. The method according to claim 2, wherein the M first CSI-RS resources correspond sequentially to the M instances of CBSR information according to sizes of resource identifiers of the M first CSI-RS resources.

4. The method according to any one of claims 2 to 3, wherein the second information further comprises third information, or the method comprises: receiving, by the terminal, third information sent by the network device,
wherein the third information indicates the first CSI-RS resources.

5. The method according to claim 4, wherein the third information comprises N bits, the N bits correspond to the N CSI-RS resources respectively, and each bit in the third information indicates whether a corresponding CSI-RS resource is configured with CBSR information.

6. The method according to claim 5, wherein the N CSI-RS resources correspond sequentially to the N bits in the third information according to sizes of resource identifiers of the N CSI-RS resources.

7. The method according to claim 2, wherein each instance of CBSR information of the M instances of CBSR information comprises a first information field, and the first information field indicates a CSI-RS resource corresponding to the instance of CBSR information.

8. The method according to claim 7, wherein the first information field comprises at least $\left⌈{log}_{2}N\right⌉$ bits.

9. The method according to claim 2, wherein the second information comprises N-M placeholders, the N-M placeholders correspond to N-M second CSI-RS resources respectively, and the second CSI-RS resources are different from the first CSI-RS resources; and
each of the N-M placeholders indicates that a corresponding CSI-RS resource is not configured with CBSR information.

10. The method according to claim 9, wherein the N CSI-RS resources correspond sequentially to the M instances of CBSR information and the N-M placeholders according to sizes of resource identifiers of the N CSI-RS resources.

11. The method according to any one of claims 1 to 10, wherein determining, by the terminal, the CBSR information corresponding to the M first CSI-RS resources comprises:
determining, by the terminal, the CBSR information corresponding to the M first CSI-RS resources according to a preset rule in a case where M equals N.

12. The method according to claim 11, wherein determining, by the terminal, the CBSR information corresponding to the M first CSI-RS resources according to the preset rule comprises:
determining, by the terminal, that the CBSR information corresponding to each of the M first CSI-RS resources is first CBSR information, wherein the first CBSR information is pre-configured CBSR information or CBSR information pre-agreed by a protocol.

13. A method for processing information, comprising:
sending, by a network device, first information to a terminal, wherein the first information is used to configure N channel state information-reference signal (CSI-RS) resources, the N CSI-RS resources are configured for the terminal to receive CSI-RSs, the N CSI-RS resources comprise M first CSI-RS resources, and the M first CSI-RS resources are CSI-RS resources configured with codebook subset restriction (CBSR) information among the N CSI-RS resources, wherein M is less than or equal to N, and N is an integer greater than or equal to 1.

14. The method according to claim 13, comprising:
sending, by the network device, second information to the terminal, wherein the second information comprises M instances of CBSR information and is configured to determine CBSR information corresponding to the M first CSI-RS resources.

15. The method according to claim 14, wherein the M first CSI-RS resources correspond sequentially to the M instances of CBSR information according to sizes of resource identifiers of the M first CSI-RS resources.

16. The method according to any one of claims 13 to 14, wherein the second information further comprises third information, or the method comprises: sending, by the network device, third information to the terminal,
wherein the third information indicates the first CSI-RS resources.

17. The method according to claim 16, wherein the third information comprises N bits, the N bits correspond to the N CSI-RS resources respectively, and each bit in the third information indicates whether a corresponding CSI-RS resource is configured with CBSR information.

18. The method according to claim 17, wherein the N CSI-RS resources correspond sequentially to the N bits in the third information according to sizes of resource identifiers of the N CSI-RS resources.

19. The method according to claim 14, wherein each of the M instances of CBSR information comprises a first information field, and the first information field indicates a CSI-RS resource corresponding to the instance of CBSR information.

20. The method according to claim 19, wherein the first information field comprises at least $\left⌈{log}_{2}N\right⌉$ bits.

21. The method according to claim 14, wherein the second information comprises N-M placeholders, the N-M placeholders correspond to N-M second CSI-RS resources respectively, and the second CSI-RS resources are different from the first CSI-RS resources; and
each of the N-M placeholders indicates that a corresponding CSI-RS resource is not configured with CBSR information.

22. The method according to claim 21, wherein the N CSI-RS resources correspond sequentially to the M instances of CBSR information and the N-M placeholders according to sizes of resource identifiers of the N CSI-RS resources.

23. A terminal, comprising:
a transceiver module configured to receive first information sent by a network device, wherein the first information is used to configure N channel state information-reference signal (CSI-RS) resources, and the N CSI-RS resources are configured for the terminal to receive CSI-RSs; and
a processing module configured to determine codebook subset restriction (CBSR) information corresponding to M first CSI-RS resources, wherein the M first CSI-RS resources are CSI-RS resources configured with CBSR information among the N CSI-RS resources, wherein M is less than or equal to N, and N is an integer greater than or equal to 1.

24. A network device, comprising:
a transceiver module configured to send first information, wherein the first information is used to configure N channel state information-reference signal (CSI-RS) resources, the N CSI-RS resources are configured for a terminal to receive CSI-RSs, the N CSI-RS resources comprise M first CSI-RS resources, and the M first CSI-RS resources are CSI-RS resources configured with codebook subset restriction (CBSR) information among the N CSI-RS resources, wherein M is less than or equal to N, and N is an integer greater than or equal to 1.

25. A terminal, comprising:
one or more processors; and
a memory coupled to the one or more processors, and comprising executable instructions which, when executed by the one or more processors, cause the terminal to perform the method for processing information according to any one of claims 1 to 12.

26. A network device, comprising:
one or more processors; and
a memory coupled to the one or more processors, and comprising executable instructions which, when executed by the one or more processors, cause the network device to perform the method for processing information according to any one of claims 13 to 22.

27. A communication system, comprising a terminal and a network device, wherein the terminal is configured to perform the method for processing information according to any one of claims 1 to 12, and the network device is configured to perform the method for processing information according to any one of claims 13 to 22.

28. A storage medium, storing instructions which, when run on a communication device, cause the communication device to perform the method for processing information according to any one of claims 1 to 14 or any one of claims 13 to 22.
